# EUROPEAN PATENT APPLICATION

(11) **EP 1 686 764 A1**
(43) Date of publication of application: **02.08.2006**
(21) Application number: 06250361.0
(22) Date of filing: 24.01.2006
(51) Int. Cl.: H04L 29/08, H04L 12/24

(54) **Method and apparatus for analyzing and problem reporting in storage area networks**

(30) Priority: 26.01.2005 US 647107 P; 08.07.2005 US 176982
(71) Applicant: EMC Corporation, White Plains, NY 10601 (US)
(72) Inventor: Florissi, Danilo, Briarcliff Manor, NY 10562 (US); Florissi, Patricia, Briarcliff Manor, NY 10562 (US); Patil, Prasanna, Elmsford, NY 10523 (US)
(74) Representative: Hutchinson, Glenn Stanley

(57) **Abstract**

A method and apparatus for logically representing and performing an analysis on a Storage Area Network (SAN) is disclosed. The method comprising the steps representing selected ones of a plurality of components and the relationship among the components associated with the SAN, providing a mapping between a plurality events and a plurality of observable events occurring among the components, wherein the mapping is represented as a value associating each event with each observable event, and performing the system analysis based on the mapping of events and observable events. In another aspect of the invention, a method and apparatus are disclosed for representing and performing an analysis on a SAN wherein the SAN is included in a larger system logically represented as a plurality of domains is disclosed. In this aspect of the invention, the method comprises the steps of representing selected ones of a plurality of components and relationship among the components, wherein at least one of the plurality of components is associated with at least two of the domains, providing a mapping between a plurality events and a plurality of observable events occurring among the components, wherein the mapping is represented as a value associating each event with each observable event, and performing the system analysis based on the mapping of events and observable events.

## Description

### Claim of Priority

This application is a continuation-in-part of, and claims the benefit, pursuant to 35 USC 120, of the earlier filing date of co-pending US Patent Application Serial No. 10/813,842, entitled "Method and Apparatus for Multi-Realm System Modeling" filed March 31, 2004, the contents of which are incorporated by reference herein, and further claims the benefit, pursuant to 35 USC 119(e), of the earlier filing date of US Provisional Patent Application Serial No. 60/647,107, entitled "Method and Apparatus for Analyzing and Problem Reporting in Storage Area Networks," filed on January 26, 2005, the contents of which are incorporated by reference herein.

### Related Applications

This application is related to co-pending U.S. Patent Application Serial No 11/077, 932 entitled "Apparatus and Method for Event Correlation and Problem Reporting," which is a continuation of U.S. Patent No. 6,868,367, filed on March 27, 2003, which is a continuation of U.S. Patent Application Serial No. 09/809,769 filed on March 16, 2001, now abandoned, which is a continuation of U.S. Patent No. 6,249,755, filed on July 15, 1997, which is a continuation of U.S. Patent No. 5,661,668, filed on July 12, 1996, which is a continuation of application Serial No. 08/465,754, filed on June 6, 1995, now abandoned, which is a continuation of U.S. Patent No. 5,528,516, filed on May 25, 1994.which is a continuation of U.S. Patent No. 6,249,755, filed on July 15, 1997, which is a continuation of U.S. Patent No. 5,661,668, filed on July 12, 1996, which is a continuation of application Serial No. 08/465,754, filed on June 6, 1995, now abandoned, which is a continuation of U.S. Patent No. 5,528,516, filed on May 25, 1994, the contents of which are incorporated by reference herein.

### Field of the Invention

The invention relates generally to computer networks, and more specifically to apparatus and methods for modeling and analyzing Storage Area Networks.

### Background of the Invention

Storage Area Networks (SANs) have considerably increased the ability of servers to add large amounts of storage capability without incurring significant expense or service disruption for re-configuration. However, the ability to analyze SAN performance and/or availability has been limited by the models that have been employed. The lack of a systematic model of behavior specifically suited for the SAN objects and relationships limits several forms of important analysis. For example, it is difficult to determine the impact in the SAN, in the overall system and/or on the applications of failures in SAN components. Another example is determining the root cause problems that cause symptoms in SAN, in the overall system and/or on the applications.

Hence, there is a need in the industry for a method and system for analyzing and modeling Storage Area Networks to determine root-cause failures and impacts of such failures.

### Summary of the Invention

A method and apparatus for logically representing and performing an analysis on a Storage Area Network (SAN) is disclosed. The method comprising the steps representing selected ones of a plurality of components and the relationship among the components associated with the SAN, providing a mapping between a plurality events and a plurality of observable events occurring among the components, wherein the mapping is represented as a value associating each event with each observable event, and performing the system analysis based on the mapping of events and observable events. In another aspect of the invention, a method and apparatus are disclosed for representing and performing an analysis on a SAN wherein the SAN is included in a larger system logically represented as a plurality of domains is disclosed. In this aspect of the invention, the method comprises the steps of representing selected ones of a plurality of components and relationship among the components, wherein at least one of the plurality of components is associated with at least two of the domains, providing a mapping between a plurality events and a plurality of observable events occurring among the components, wherein the mapping is represented as a value associating each event with each observable event, and performing the system analysis based on the mapping of events and observable events.

### Detailed Description of the Figures

Figure 1 illustrates a conventional Storage Area Network;

Figures 2A and 2B illustrate a logical representation associated with an exemplary IP network;

Figures 3A-3D illustrate a logical representation of an exemplary SAN;

Figure 4 illustrates an example of overlapping domains in a SAN in accordance with the principles of the invention;

Figure 5 illustrates an example of impacted elements of a SAN when a problem or an error occurs;

Figure 6 illustrates a second example of impacted elements of a SAN when a problem or error occurs;

Figure 7 illustrates a propagation of a disk problem or error in a SAN;

Figure 8 illustrates an exemplary SAN diagnostic analysis in accordance with the principles of the invention;

Figure 9 illustrates an exemplary SAN impact analysis in accordance with the principles of the invention;

Figures 10A-10E illustrate exemplary aspects of a SAN model in accordance with the principles of the invention;

Figures 11A and 11B illustrate an exemplary root-cause analysis correlation function in accordance with the principles of the invention;

Figures 12A and 12B illustrate an exemplary impact analysis correlation function in accordance with the principles of the invention; and

Figure 13 illustrates a system implementing the processing shown herein.

It is to be understood that these drawings are solely for purposes of illustrating the concepts of the invention and are not intended as a definition of the limits of the invention. The embodiments shown in the figures herein and described in the accompanying detailed description are to be used as illustrative embodiments and should not be construed as the only manner of practicing the invention. Also, the same reference numerals, possibly supplemented with reference characters where appropriate, have been used to identify similar elements.

### Detailed Description

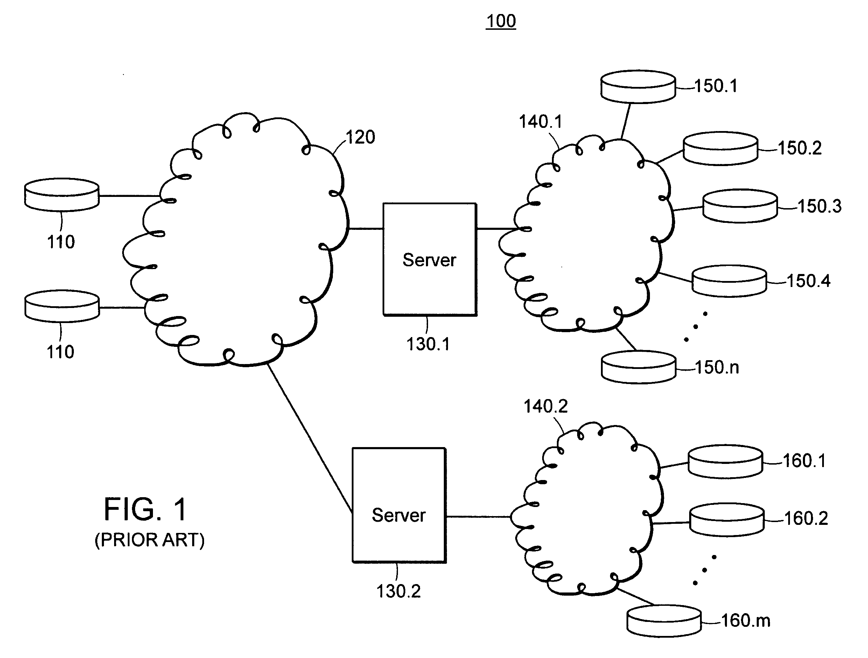

Figure 1 illustrates an exemplary embodiment of a Storage Area Network (SAN) 100, wherein computing systems 110 may provide or receive information from server 130 through a communication path represented as network 120. Server 130 is further in communication, via network 140, with a plurality of storage medium 150.1-150.n, which appear logically as a single massive storage space. The idea is that the two servers are attached to the same SAN. The use of a SAN is advantageous in that additional storage capacity may be added by adding additional storage medium to the network. In this illustrated case, network 120 may represent a network such as the Internet, which uses an IP-based protocol and network 140 may represent a network using a Fibre Channel (FC) based protocol. Fibre Channel-based protocols have been developed for SANs as they provide a high speed access and large bandwidths. Recently, IP-based networks have been used to support server 130 -storage medium 150.1-150.n communications. SANs, Fibre Channel-protocols and IP-protocols are well known in the art and need not be discussed further herein.

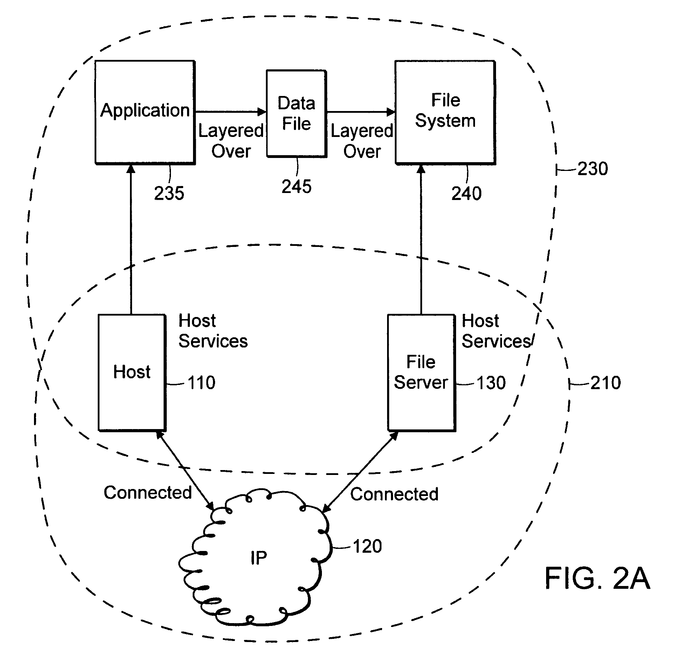

Figure 2A illustrates a logical representation of an IP network. In this case, network 120 enables communication between host or computer system 110 and file server 130, in this illustrated case. Further illustrated is application 235, which is "hosted" on computer system 110 and file system 240, "hosted" on file server 130. Application 235 and file system 240 represent software programs that are independently executed on their respective host devices. Data file 245 represents the relationship between the application 235 and file system 240.

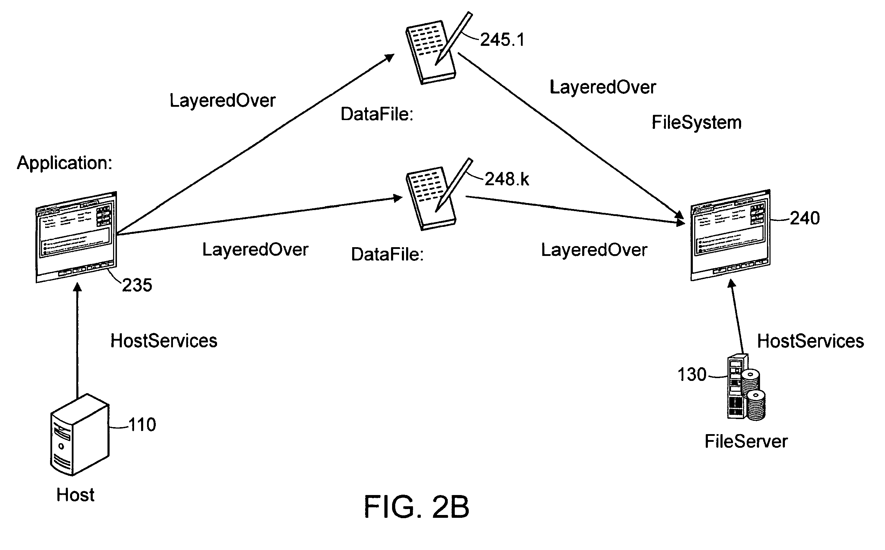

Figure 2B illustrates a mapping of the IP network shown in Figure 2A, wherein a plurality of data files 245.1-245.k are being accessed, using known read and/or written operations, by application 235. This access may be represented by an association between the application and the file(s) referred to as a "layered-over relationship." Also shown is that the file system 240 represents a manager that may receive information provided by files 245 from application 235 and provide information to application 235. In this case, file system 240 may be represented by an association between the file system 240 and the files 245 which is also referred to as a "layered-over relationship." In the context of the instant application a "layered-over relationship" indicates a dependency between a plurality of objects, which may be represented or referred to as object classes.

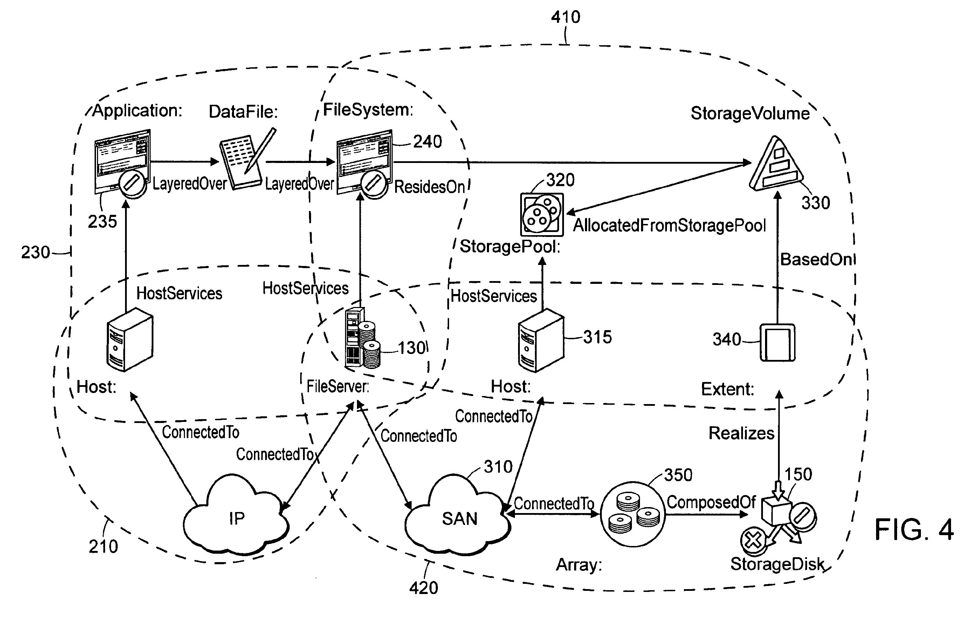

Returning to Figure 2A, also illustrated are domains 210 and 230 which include respective hardware and software elements. In this illustrative case, domain 210, referred to as the IP domain, includes the hardware or physical elements computing system 110, IP network 120 and file server 130. Domain 230, referred to as the Application domain, includes the non-physical software elements application 235, data file 245, file system 240 and the hardware or physical elements computing system 110 and file system 130. As shown computing system 110 and file system 130 are included in both domains and are referred to as domain intersections or associations. Domain associations are discussed in more detail with regard to Figure 4.

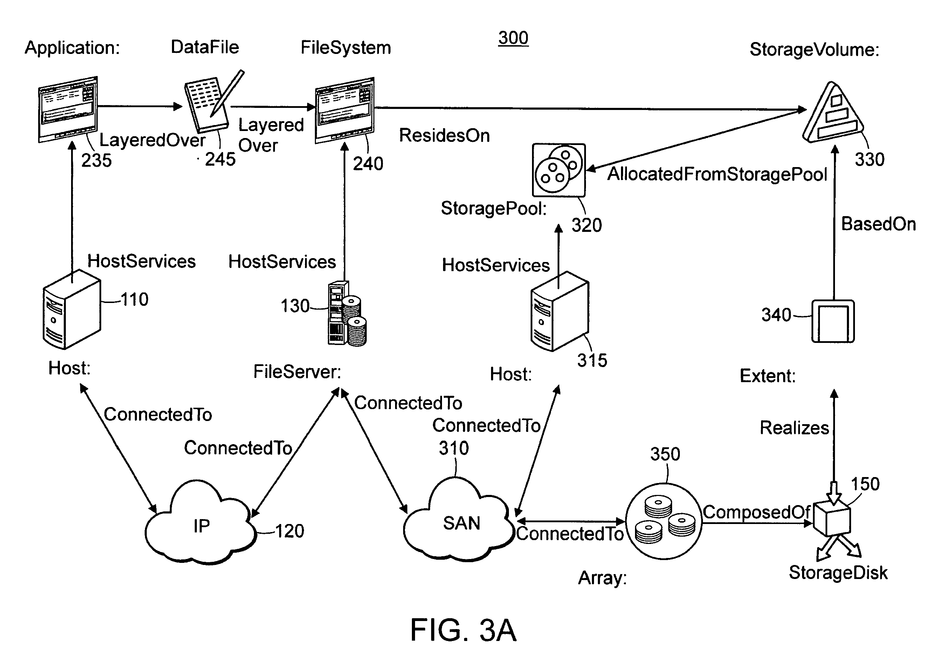

Figure 3A illustrates a logical representation of an exemplary SAN domain and related IP and application domains. In this illustrated example, the elements of the IP network, i.e., computing system 110, network 120, file server 130 and respective software 235, 240 are as shown in Figure 2A, are further in communication, via SAN 310, with a host system 315 and a storage array 350, which logically represents disks 150.1-150.n (see Figure 1). Host 315 represents the manager for the storage pool and executes software 320 for the storage pool management. The storage disks 150 are divided in logical elements referred to as Extents 340, which are further allocated to another logical entity, i.e., storage volumes 330. The allocation of extents 340 to storage volumes 330 is carried on by the storage pool manager (not shown).

Extents 340, more specifically, are units of allocation of disks, memory etc., and represent a generalization of the traditional storage block concept A volume is composed of extents 340 and is used to create a virtual space for the file system. For example, references to drives C:, D:, E:, etc. may be associated with logical volume labels within, for example, the MICROSOFT WINDOWS operating system. MicroSoft and Windows are registered trademarks of Microsoft Corporation, Redmond, Wa., USA.

The storage pool 320 is representative of a plurality of extents 340 and used for administrative purposes. In this case, when allocation of a volume is desired, the storage pool manager selects a plurality of extents 340 and designates selected extents 340 as a volume 330. Thus, the file system 240 (Figure 2) is able to allocate storage volumes to store its files. Storage volume 330 and extent 340, which are well-known concepts associated with the logical representation of physical storage devices.

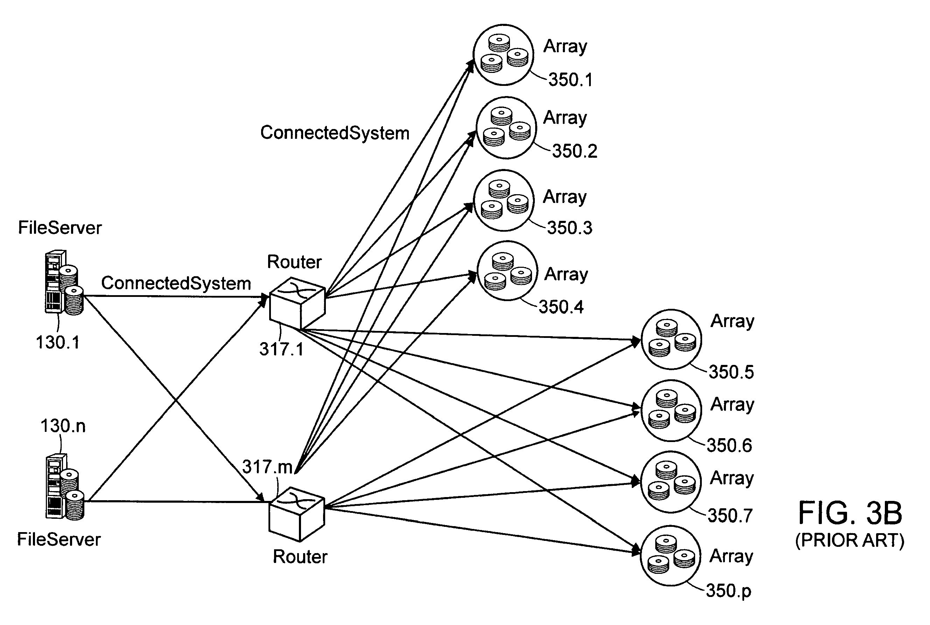

Figure 3B illustrates an exemplary SAN deployment, wherein file servers 130.1-130.n are each in communication with a plurality of router switches 317.1-317.m. Each of the router switches 317.1-317.m are in communication with storage medium arrays 350.1-350.p.

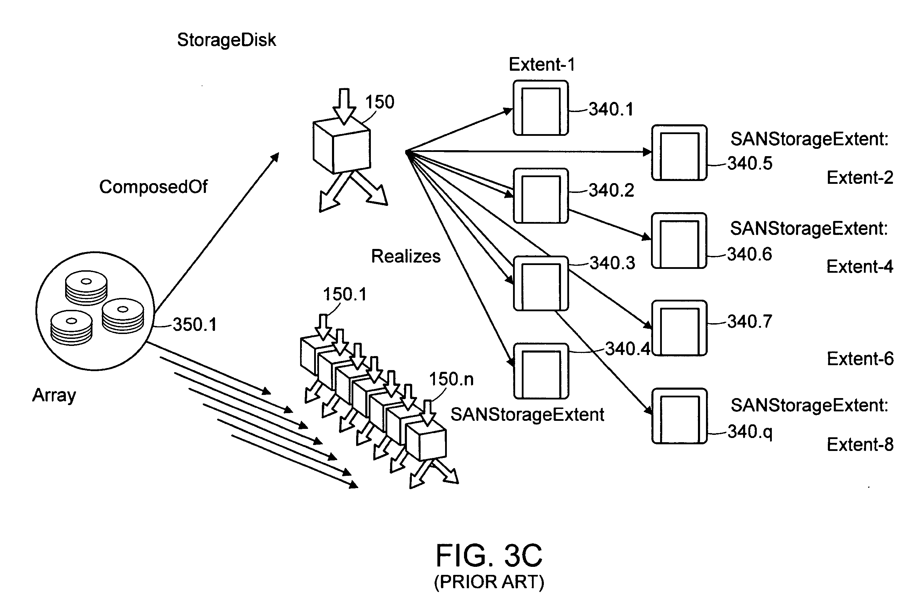

Figure 3C illustrates an exemplary storage medium array 350.1, for example, deployment. In this illustrative example, storage medium array 350.1 is composed of storage disk medium 150 or a plurality of storage medium 150.1 through 150.n. Each storage disk medium 150 is divided into logical storage extents 340.1 through 340.q.

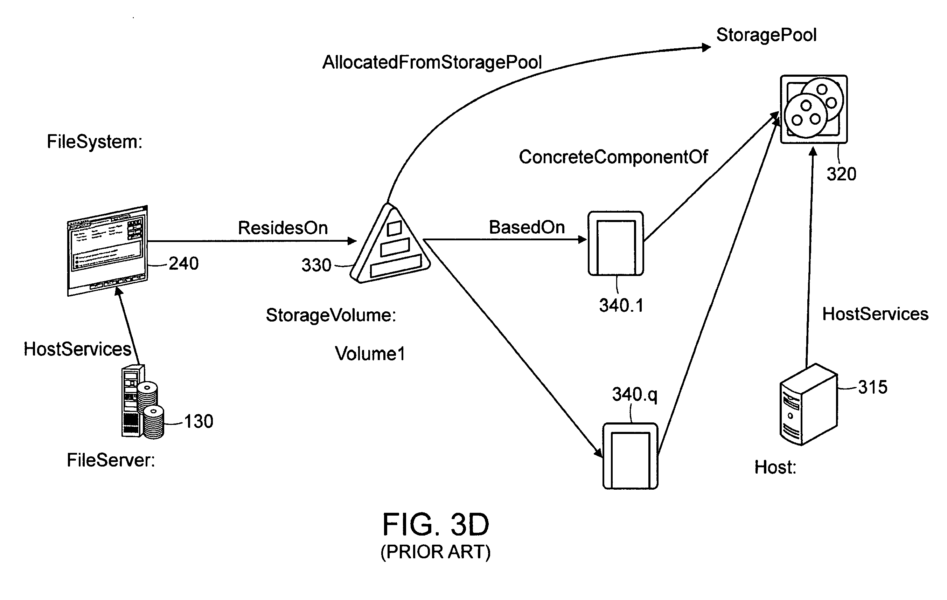

Figure 3D illustrates an exemplary file system 240 allocating resources in storage volume 330, which is associated with extent 340. In this illustrative example, file server 130 hosts file system 240, which allocates resources from storage volume 330. Storage volume 330 allocates storage space on extents, e.g., 340.1-340.q. Storage volume 330 uses the services of storage pool 320, i.e., a storage manager that implements the storage pool of extents 340, which is hosted on host server 315.

Figure 4 illustrates an example of overlapping domains in a system that includes a SAN in accordance with the principles of the invention. In this illustrated example, domains 210 and 230 (Figure 2) are shown including hardware and software elements, respectively, of IP network 120. Also shown are domains 410 and 420. Domain 410, referred to as Virtualization domain, includes the hardware elements filer server 130, host 315, software storage pool 320, software storage volume 330 and software extent 340 and the software file system 240 software element. Domain 420, referred to as SAN domain, includes the hardware elements file server 130, network 130, array 350, storage disk 150, host 315 and software extent 340.

Intersection points or intersection associations between domains may further be determined. For example, file server 130 represents an intersection point between domains 210 and 230, as previously noted, and between domains 410 and 420. Similarly, host 315 represents an intersection between domains 410 and 420. Knowledge of intersection points is advantageous as an error or fault in a domain that impacts an intersection point may generate failures and/or error messages in other domains. That is, intersection points function as conduits for events across intersecting domains. For example, an error in disk 150, for example, affects extent 340, which in turn affects volume 330, which further affects file system 240. Hence, errors in file system 240 may generate errors or detectable events in application domain 230 as application 235 may use a file serviced by file system 240. Similarly, a failure in disk 150 may affect file server 130 if file server 130 hosts a file system that allocates volumes that use disk 150 and may further create problems or detectable events in applications accessing disk 150.

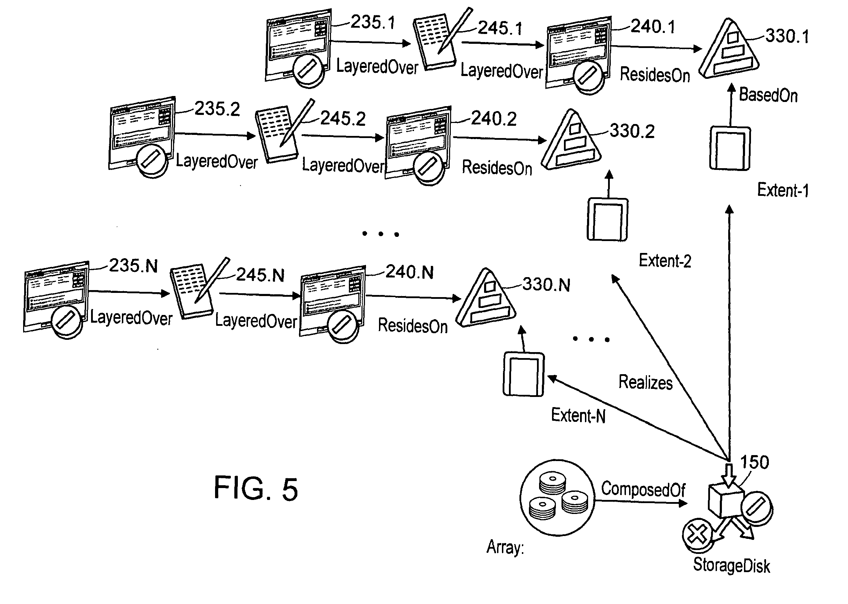

Figure 5 illustrates the impact of an error occurring in a storage medium 150 in a system using multiple files to store data on storage medium 150. In this case, the error on storage medium 150 propagates though to the application domain, such that errors or detectable events are incurred in associated applications 235.1-235.r.

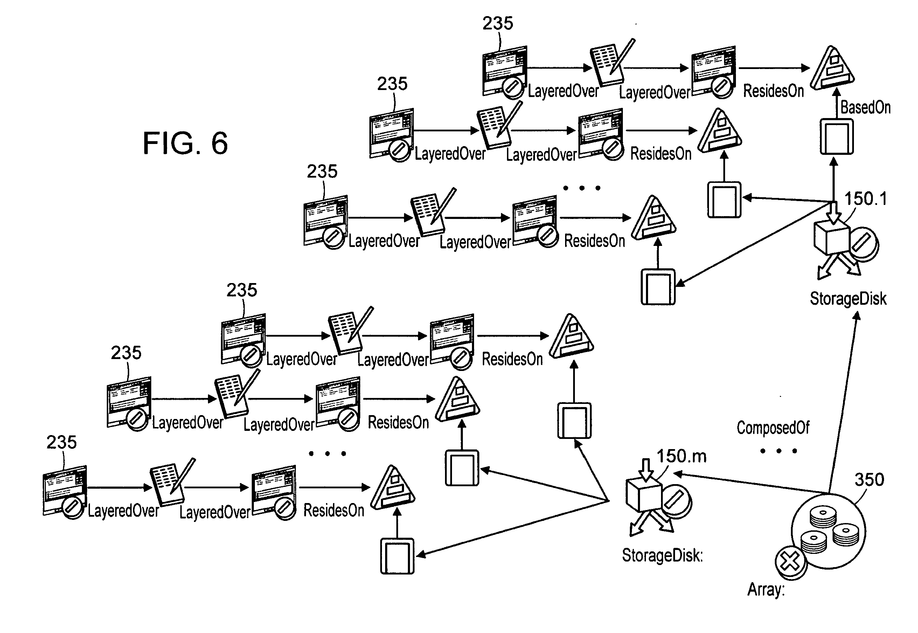

Figure 6 illustrates a second example of the occurrence of errors or detectable events in applications caused by a failure or a causing event in array 350. In this case, the causing event may be a detectable event in one of the plurality of storage medium 150.1-150.m that comprise array 350.

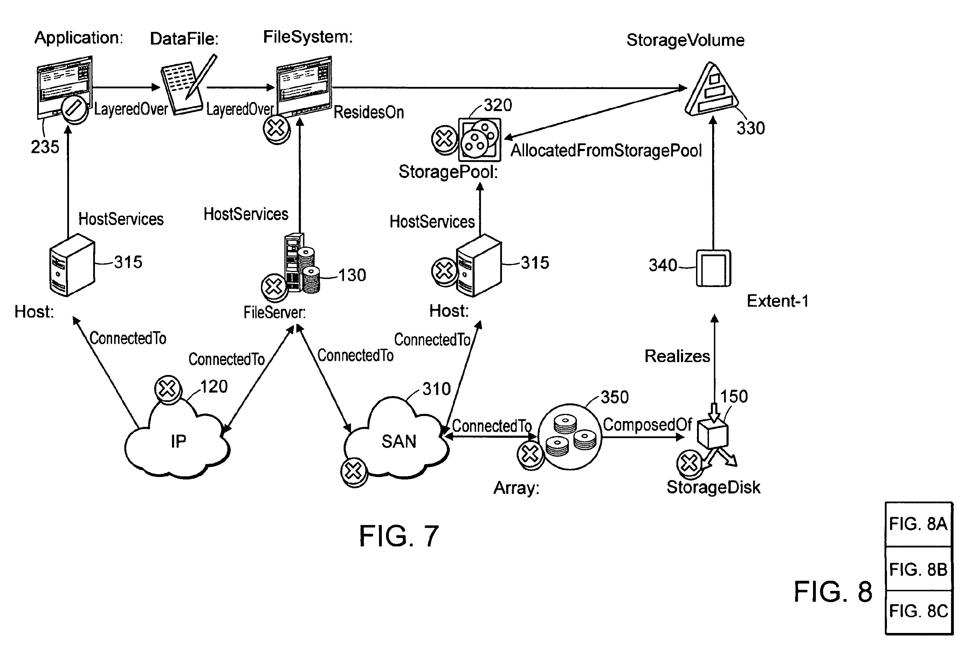

Figure 7 illustrates, how an error in one or more components may cause the same symptom to be detected. In this illustrative example, a failure to read a file causes an error in application 235. For example, an error in any one of IP network 120, file server 130, SAN 310, Host 315, storage pool 320, array 350 or storage medium 150 will prevent application 235 from reading a file from storage medium 150. In this case, from the symptom "application 235 cannot read a file from the storage medium 150" it is not possible to determine the cause of the problem.

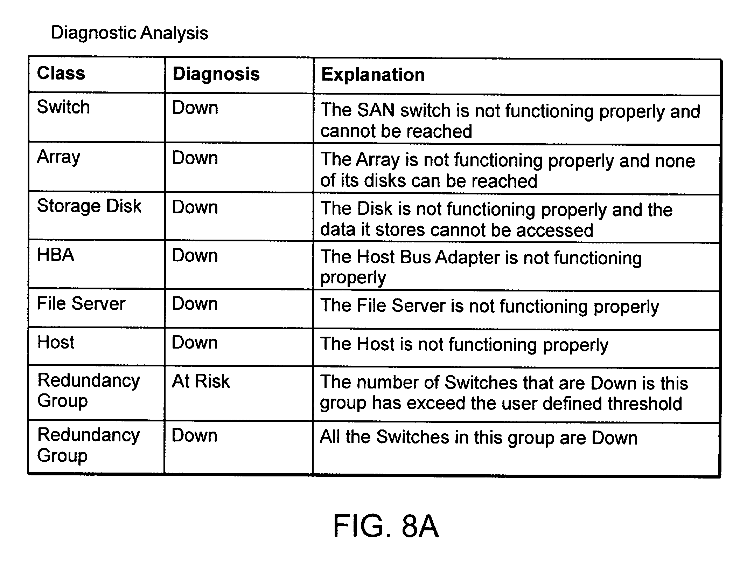

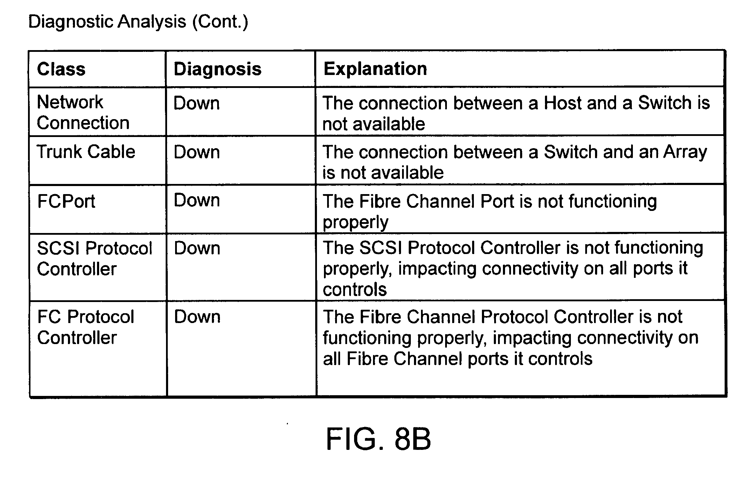

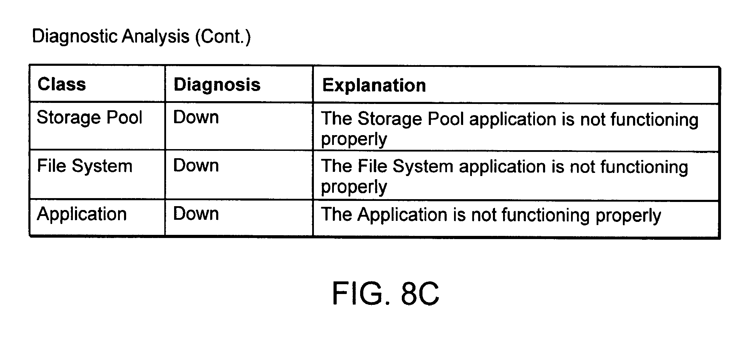

Figure 8 illustrates a chart of errors that may occur in the system shown in Figure 4. In this case, the object classes shown represent elements that may fail and may also constitute possible root causes of problems for the system shown.

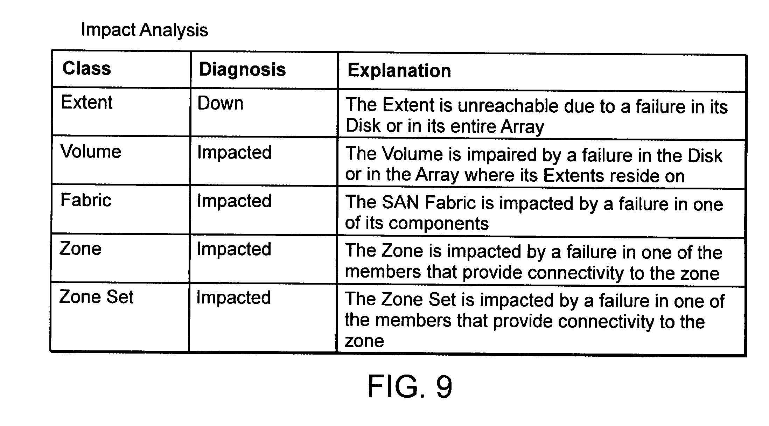

Figure 9 illustrates a chart of the impact of failures in the system shown in Figure 4. In this case, the objects shown are dependent upon the condition of the objects shown in Figure 8. More specifically, the dependencies are shown in the Explanation column.

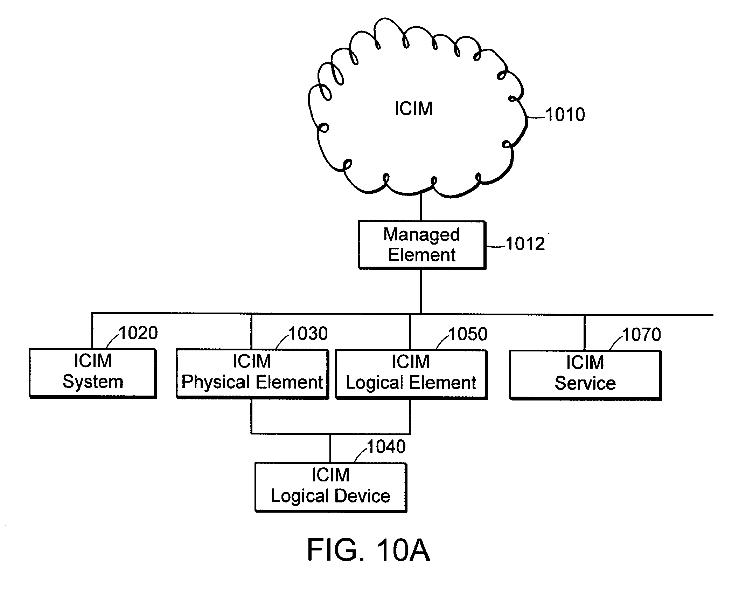

Figures 10A-10E, collectively, illustrate an exemplary embodiment of an abstract model in accordance with the principles of the present invention. Figure 10A illustrates an exemplary abstract model 1010 of a system that includes a SAN network in accordance with the principles of the invention. The model shown is an extension of a known network models, such as the SMARTS® *InCharge*™ Common Information Model (ICIM), or similarly defined or pre-existing CIM-based model and adapted for the SAN. Standards for SANS are in development and may be found at http://www.snia.org/smi/tech_activities/smi_spec_pr/spec/]. SMARTS and *Incharge* are trademarks of EMC Corporation, Inc., having a principle place of business in Hopkinton, Ma, USA. This model is an extension of the DMTF/SMI model. Model based system representation is discussed in commonly-owned USPA Serial No. 11//034,192, filed Jan. 12, 2005 and US Patent Nos. 5,528,516, 5,661,668 6,249,755 and 6,868,367, the contents of which are incorporated by reference herein. The aforementioned US Patent teach performing a system analysis based on a mapping of observable events and detectable events, e.g., symptoms and problems, respectively.

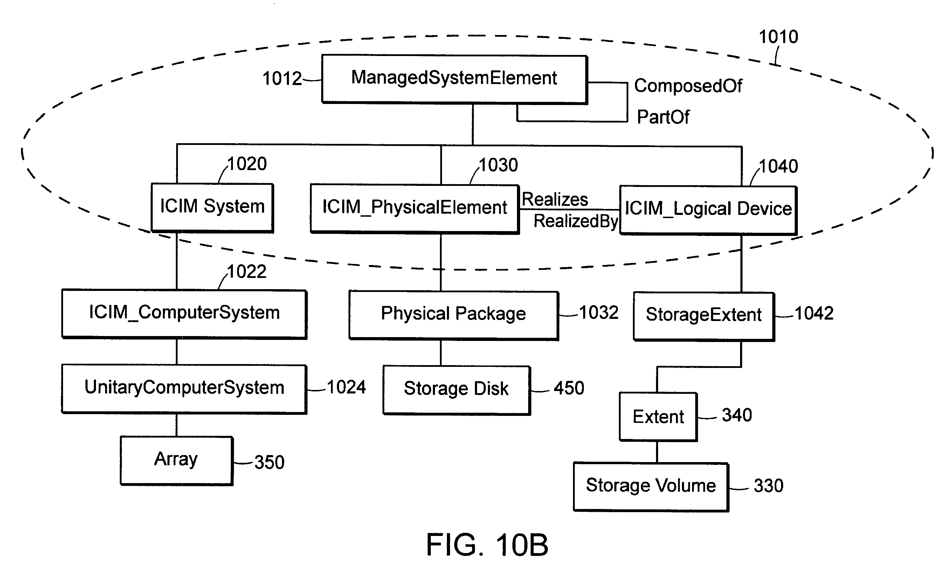

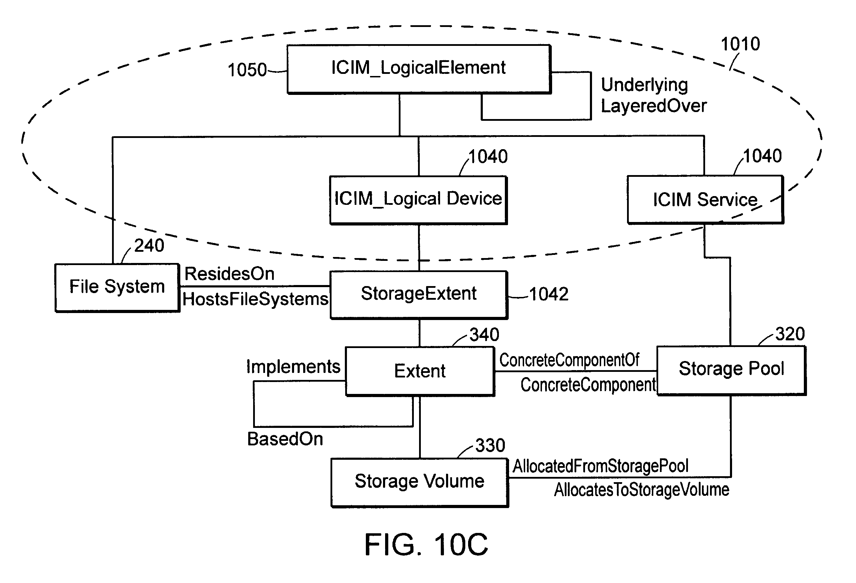

Abstract model 1010 is known to represent a managed system 1012 containing selected ones of the physical network components 1030, e.g., nodes, routers, computer systems, disk drives, etc., and/or logical network components 1050, e.g., software, application software, ports, disk drive designation, etc. Those network elements or components that are selected for representation in the model are referred to as managed components. The representation of the managed components includes aspects or properties of the component. The relationships between the managed components, as they have been shown in Figures 2A, 2B, 3A-3D, and 4-7, are also represented and contained in the model. Also shown are ICIM_System 1020 and ICIM_Service 1070 managed components, which are described in more detail in Figures 10B and 10C, respectively.

Figure 10B illustrates an exemplary extension of object class ManagedSystemElement 1012, defining object classes ICIM_System 1020, ICIM_PhysicalElement 1030, and ICIM_LogicalDevice 1040. These objects are representative of generic concepts or components of Arrays 350 Disks 150 and Extents 340, in the SAN shown in Figure 3A, for example. As shown, the managed component object PhysicalElement 1030 and LogicalDevice 1040 share a relationship wherein PhysicalElement 1030 is RealizedBys LogicalDevice 1040 and LogicalDevice 1040 Realizes PhysicalElement 1030. Furthermore, object class ICIM_System 1020 includes object class ICIM_Computer System 1022, which includes class UnitaryComputerSystem 1024 and represents Array 350. The term Unitary Computer Systems is one expressed by the Distributed Management Task Force (DMTF). DMTF is well-known in the art and need not be discussed in detail herein.

Further shown is object class ICIM_PhysicalElement 1030 that includes object class Physical Package 1032, which represents physical components such as physical storage disk 150. Object class ICIM_LogicalDevice includes object class StorageExtent 1042, which represents Extent 340 and Extent 340 is in communication with StorageVolume 330.

Figure 10C illustrates an exemplary extension of object class ICIM_LogicalElement 1050 defining object classes, ICIM_LogicalDevice 1040 and ICIM_Service 1070. These object class represent the file system, volumes, extents and storage pools of the SAN shown in Figure 3A. More specifically, object class LogicalElement 1060 represents File system 240 and ICIM-Service 1070 represents storage pool 320. Relationships among the object classes are further shown. For example, File system 240 possesses a ResidesOn relationship with object class StorageExtent 1042, which possesses a HostsFileSystem relationship with File system 240.

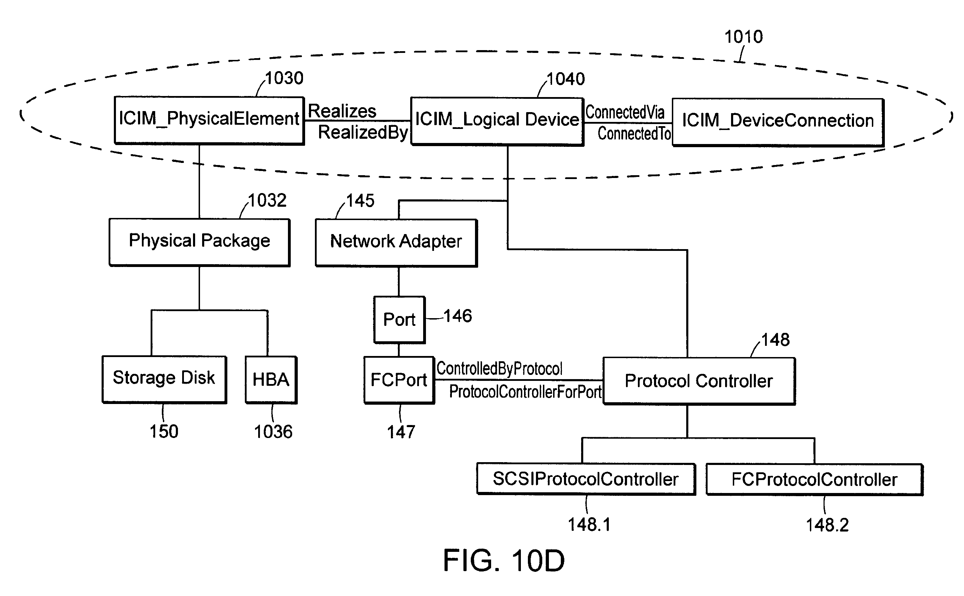

Figure 10D illustrates an extension of the object classes to illustrate the relationships between the disks, cards and ports of the SAN shown in Figure 3A. For example, Physical Package object class 1032 of PhysicalElement object class 1030 may represent the storage disk 150, as previously shown, and HBA (Hot Bus Adaptor) 1036. HBA 1036 enables disk elements to be dynamically added or removed from the SAN. Similarly, object class Logicaldevice 1040 may represent Network Adaptor 145, which includes object class Port 146. Object class Port further may represent, as shown in this exemplary model, a Fibre Channel (FC) port 147. Although not shown, it would be recognized that Port 146 may also represent other types of ports, such as serial, parallel, SCSI, SCSI II, Ethernet, etc. LogicalDevice 1040 further represents ProtocolController 148, which represents the type of protocol used in the network. For example, ProtocolController 148 may represent SCSI (Small Computer Serial Interface) ProtocolController 148.1 and FCProtocolController 148.2. Although not shown it would be recognized that PortocolController 148 may represent other types of protocols, e.g., Ethernet.

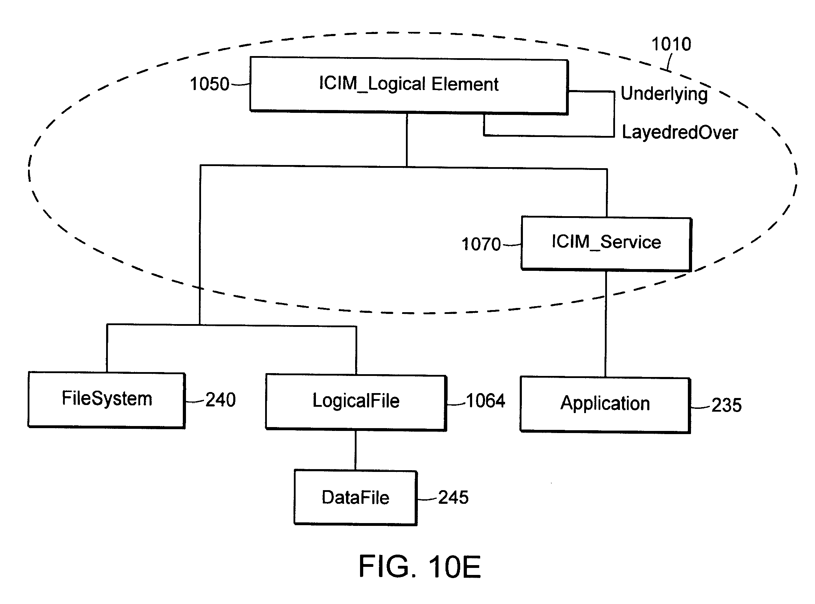

Figure 10E illustrates an extension of the object classes to illustrate the relationships between applications 235, data files 245 and file system 240 of the SAN shown in Figure 3A.

With respect of the model of Storage Area Networks described herein, a root-cause determination or an impact analysis may be determined by a correlation function, similar to that disclosed in the aforementioned commonly-owned US patents and US patent application.

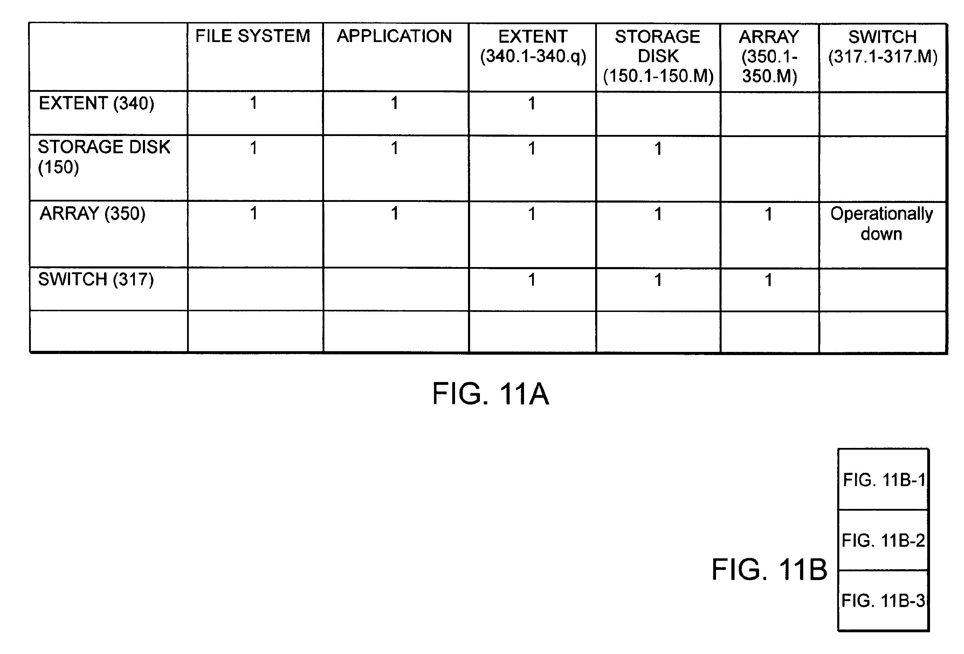

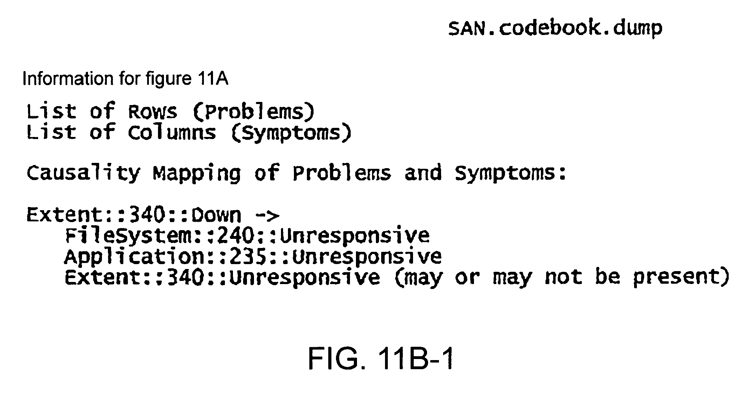

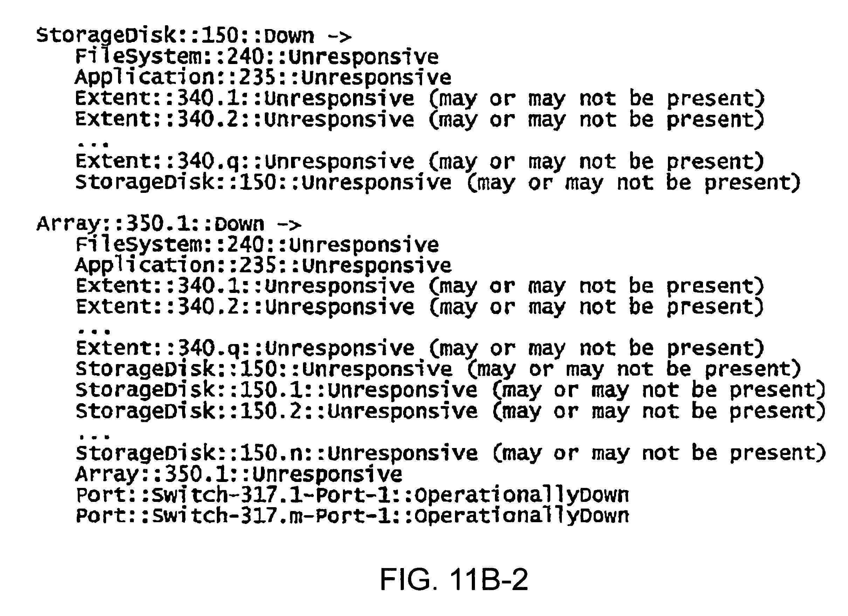

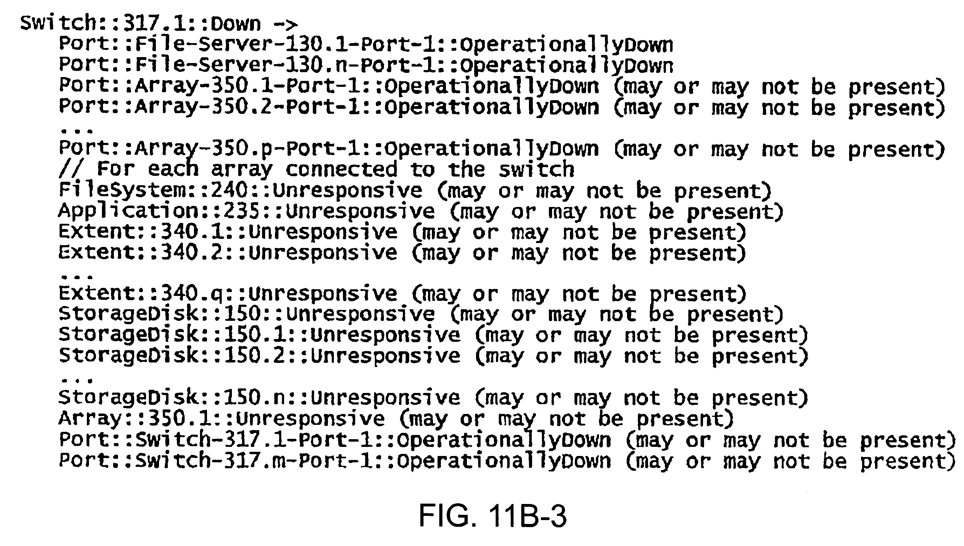

Figure 11A illustrates an exemplary causality matrix suitable for root-cause correlation function, i.e., behavior model, suitable for the SAN shown in Figure 1, with regard to the methods described in the above-referred to US Patents. Figure 11B, which is shown in textual format, illustrates additional information regarding the exemplary root cause correlation function shown in Figure 11A.

As an example of the root cause analysis consider a failure occurring in Extent 340. A failure or problem in Extent 340 may create detectable events or symptoms in File System 240, as File System 240 can no longer access data mapped into Extent 340. The failure may further create a detectable event or symptom in Application 235 when Application 235 makes a request to obtain data from File System 240. In some aspects, although a failure may occur, symptom may or may not be generated indicating that a component, e.g., Extent 240, is experiencing failures. The root-cause correlation must be powerful enough to be able to deal with scenarios in which symptoms are generated indicating the condition of Extent 240 and cases when symptoms are not generated. In both situations, the root-cause correlation diagnoses the Extent as the root cause. A root cause analysis of the SAN, similar to that described in the aforementioned US patents and patent application determines from the exemplary causality matrix shown, herein, and symptoms observed in the managed system the most likely root cause of the problem. In this case, the symptoms or observable events are further associated with the components associated with at least two domains, i.e., an intersection point or an association.

As a second example consider the failure of Storage Disk 150. A problem in Storage Disk 150 may cause symptoms as if all Extents in the storage disk itself are failing simultaneously. A problem in Storage Disk 150 may cause symptoms in File System 240, as File System 240 will not be able to access its data stored in Extent 340, which is part of Storage Disk 150. Similarly, it may cause symptoms in Application 235, as Application 235 will fail to access data stored in Extent 340, which is part of Storage Disk 150, from the File System 240. Similarly, a problem in the Storage disk may or may not cause symptoms in the Extents 340 that has a "RealizedBy" relationship with the failing Storage Disk. In addition, a problem in the Storage Disk, may or may not cause symptoms on the Storage Disk itself.

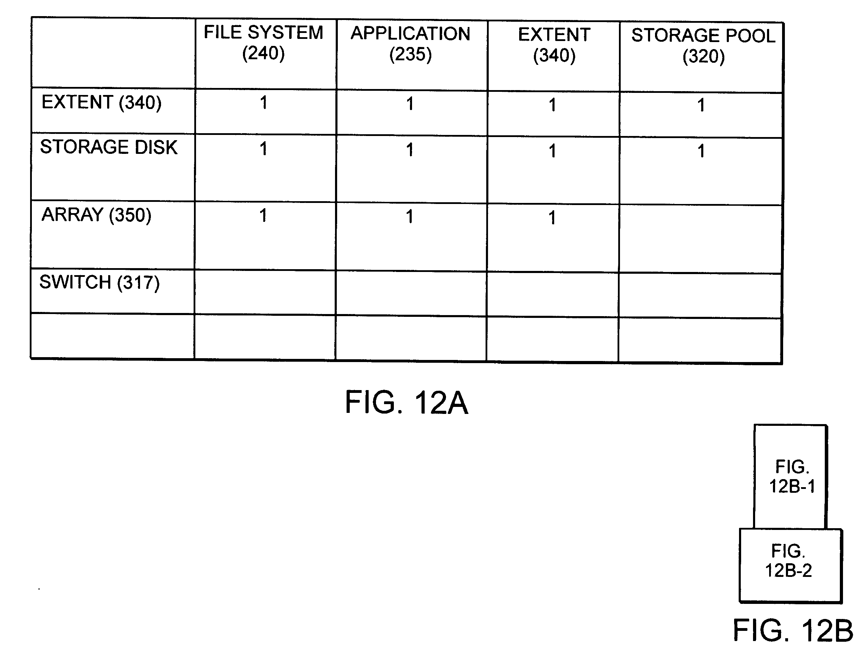

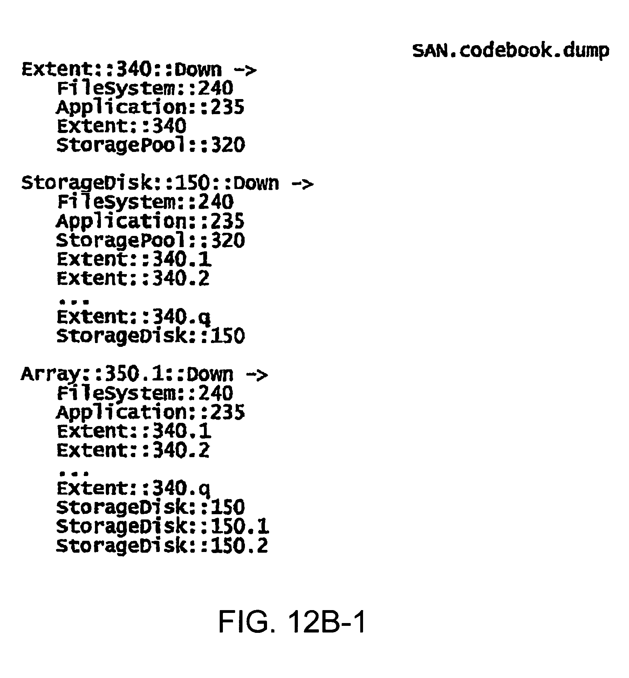

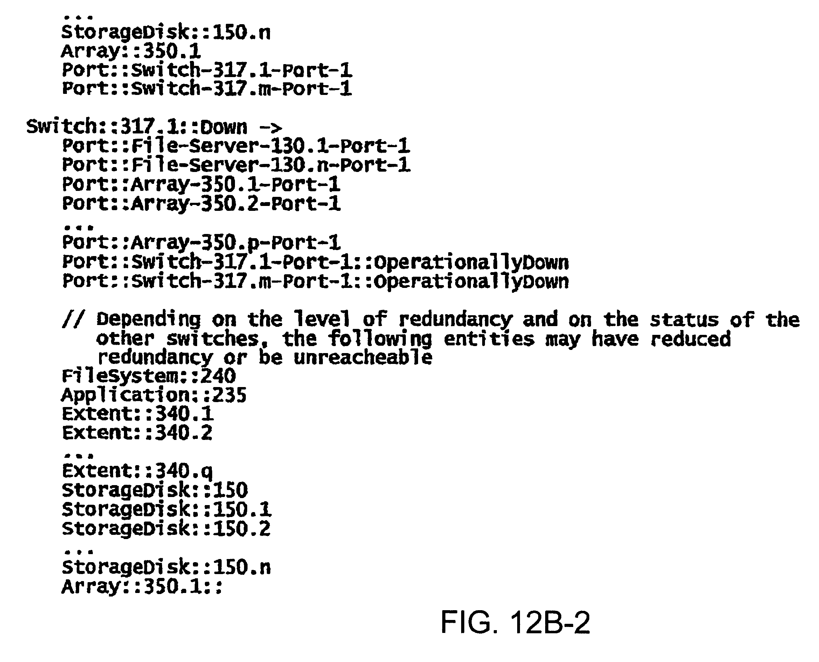

Figure 12A illustrates an exemplary impact analysis or error propagation correlation function suitable for the SAN shown in Figure 1, with regard to the methods described in the above-referred to US Patents. Figure 12B, which is shown in a textual format, illustrates additional information regarding the exemplary impact correlation function shown in Figure 12A. As discussed with regard to Figures 11A and 11B the failure in one or more managed components may predict the symptoms that are detected or experienced in the system.

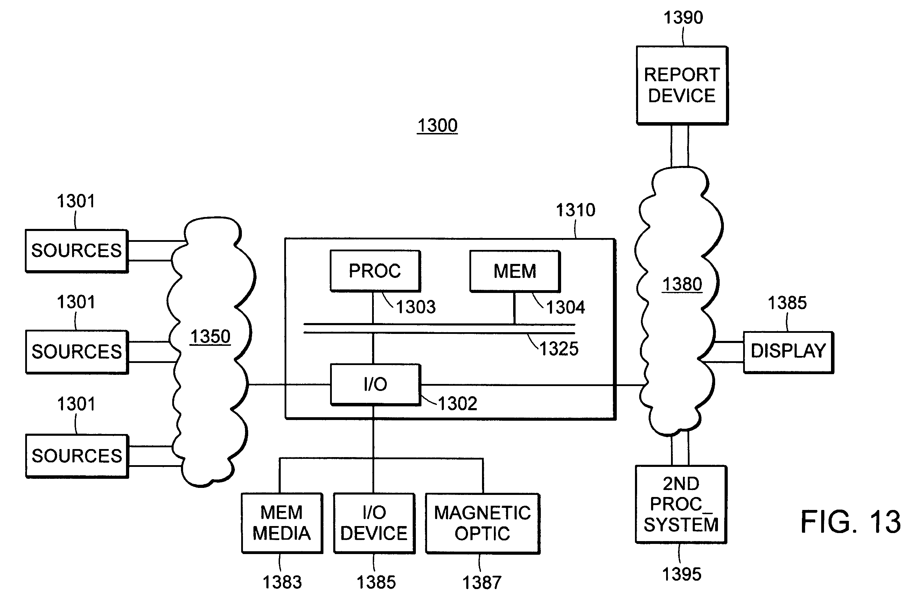

Figure 13 illustrates an exemplary embodiment of a system 1300 that may be used for implementing the principles of the present invention. System 1300 may contain one or more input/output devices 1302, processors 1303 and memories 1304. I/O devices 1302 may access or receive information from one or more sources or devices 1301. Sources or devices 1301 may be devices such as routers, servers, computers, notebook computer, PDAs, cells phones or other devices suitable for transmitting and receiving information responsive to the processes shown herein. Devices 1301 may have access over one or more network connections 1350 via, for example, a wireless wide area network, a wireless metropolitan area network, a wireless local area network, a terrestrial broadcast system (Radio, TV), a satellite network, a cell phone or a wireless telephone network, or similar wired networks, such as POTS, INTERNET, LAN, WAN and/or private networks, e.g., INTRANET, as well as portions or combinations of these and other types of networks.

Input/output devices 1302, processors 1303 and memories 1304 may communicate over a communication medium 1325. Communication medium 1325 may represent, for example, a bus, a communication network, one or more internal connections of a circuit, circuit card or other apparatus, as well as portions and combinations of these and other communication media. Input data from the client devices 1301 is processed in accordance with one or more programs that may be stored in memories 1304 and executed by processors 1303. Memories 1304 may be any magnetic, optical or semiconductor medium that is loadable and retains information either permanently, e.g. PROM, or non-permanently, e.g., RAM. Processors 1303 may be any means, such as general purpose or special purpose computing system, such as a laptop computer, desktop computer, a server, handheld computer, or may be a hardware configuration, such as dedicated logic circuit, or integrated circuit. Processors 1303 may also be Programmable Array Logic (PAL), or Application Specific Integrated Circuit (ASIC), etc., which may be "programmed" to include software instructions or code that provides a known output in response to known inputs. In one aspect, hardware circuitry may be used in place of, or in combination with, software instructions to implement the invention. The elements illustrated herein may also be implemented as discrete hardware elements that are operable to perform the operations shown using coded logical operations or by executing hardware executable code.

In one aspect, the processes shown herein may be represented by computer readable code stored on a computer readable medium. The code may also be stored in the memory 1304. The code may be read or downloaded from a memory medium 1383, an I/O device 1385 or magnetic or optical media, such as a floppy disk, a CD-ROM or a DVD, 1387 and then stored in memory 1304. Or may be downloaded over one or more of the illustrated networks. As would be appreciated, the code may be processor-dependent or processor-independent. JAVA is an example of processor-independent code. JAVA is a trademark of the Sun Microsystems, Inc., Santa Clara, Ca. USA.

Information from device 1301 received by I/O device 1302, after processing in accordance with one or more software programs operable to perform the functions illustrated herein, may also be transmitted over network 1380 to one or more output devices represented as display 1385, reporting device 1390 or second processing system 1395.

As one skilled in the art would recognize, the term computer or computer system may represent one or more processing units in communication with one or more memory units and other devices, e.g., peripherals, connected electronically to and communicating with the at least one processing unit. Furthermore, the devices may be electronically connected to the one or more processing units via internal busses, e.g., ISA bus, microchannel bus, PCI bus, PCMCIA bus, etc., or one or more internal connections of a circuit, circuit card or other device, as well as portions and combinations of these and other communication media or an external network, e.g., the Internet and Intranet.

While there has been shown, described, and pointed out fundamental novel features of the present invention as applied to preferred embodiments thereof, it will be understood that various omissions and substitutions and changes in the apparatus described, in the form and details of the devices disclosed, and in their operation, may be made by those skilled in the art without departing from the spirit of the present invention. It would be recognized that the invention is not limited by the model discussed, and used as an example, or the specific proposed modeling approach described herein. For example, it would be recognized that the method described herein may be used to perform a system analysis may include: fault detection, fault monitoring, performance, congestion, connectivity, interface failure, node failure, link failure, routing protocol error, routing control errors, and root-cause analysis.

It is expressly intended that all combinations of those elements that perform substantially the same function in substantially the same way to achieve the same results are within the scope of the invention. Substitutions of elements from one described embodiment to another are also fully intended and contemplated.
It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or other form of memory or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention.

## Claims

1. A method, operable on a computer system including a processor and a memory, for performing an analysis on a system, containing a plurality of components, represented by a plurality of domains, wherein at least one of the domains represents a Storage Area Network (SAN), the method when loaded into the computer system causes the processor to execute the steps of:
representing selected ones of the plurality of components and the relationship among the components, wherein at least one of the plurality of components is associated with at least two of the domains;
providing a mapping between a plurality events and a plurality of observable events occurring among the components, wherein the mapping associates each event with each observable event, and
performing the system analysis based on the mapping of events and observable events.

2. The method as recited in claim 1, wherein the step of representing the at least one SAN domain comprises the steps of:
creating at least one non-specific representation of the selected components, wherein the non-specific representations are selected from the group consisting of: LogicalElement, LogicalDevice, Service, FileSystem, StorageExtent, DeviceConnection, PhysicalElement, HostServices, PhysicalPackage; and
creating at least one non-specification representation of relations along which the events propagate amongst the selected components, wherein the representations of relations are selected from the group consisting of Realizes, Realizedby, ResidesOn, HostsFileSystem, ConcreteComponentOf, ConcreteComponent, AllocatedFromStoragePool, AllocatesToStorageVolume, ConnectedVia, ConnectedTo, ControlledByProtocol, PortocolControllerForPort.

3. The method as recited in claim 2, wherein the components associated with the at least two domains is selected from the group consisting of: FileSystem, FileServicer, HostServices, and StorageExtent.

4. The method as recited in claim 1, wherein the step of mapping further comprises the step of:
providing, for each of the domains, a mapping between a plurality of observable events and a plurality of events for the components within the domain, wherein at least one of the observable events is associated with a component associated with at least two of the domains.

5. The method as recited in claim 4, further comprising the step of:
determining at least one likely event based on at least one of the plurality of observable events by determining a mismatch measure associated with the plurality of observable events and the plurality of events with a corresponding one of the domains.

6. The method as recited in claim 5, further comprising the step of:
determining at least one likely event based on the at least one of the plurality of likely events determined from each of the domains.

7. The method as recited in claim 1, wherein at least one of the observable events is associated with at least one component associated with at least two of the domains.

8. The method as recited in claim 1, wherein the system analysis is selected from the group from consisting of: fault detection, fault monitoring, performance, congestion, connectivity, interface failure, node failure, link failure, routing protocol error, routing control errors, and root-cause analysis.

9. The method as recited in claim 1, wherein the system analysis comprises the step of:
determining at least one likely event based on at least one of the plurality of events.

10. A system comprising means to implement a method as claimed in any preceding claim.

11. A computer program comprising code for implementing a method or system as claimed in any preceding claim.

12. Machine-readable storage storing a computer program as claimed in claim 11.
